# EUROPEAN PATENT SPECIFICATION

(11) **EP 0 982 230 B1**
(45) Date of publication and mention of the grant of the patent: **26.03.2003**
(21) Application number: 99112761.4
(22) Date of filing: 01.07.1999
(51) Int. Cl.: B65B 57/00, G05B 19/418

(54) **Remote maintenance and management control method for packing machines and the like in a packing plant**
Verfahren zur Fernwartung und Fernüberwachung für Verpackungsmaschinen und dergleichen in einer Verpackungsanlage
Procédé d'entretien et de commande de gestion à distance pour machines d'emballage et caetera dans une installation d'emballage

(30) Priority: 27.08.1998 JP 24124398
(43) Date of publication of application: 01.03.2000
(73) Proprietor: SEIKO CORPORATION, Shimizu 424 (JP)
(72) Inventor: Hayashi, Ryuuzou, Shimizu, 424 (JP); Takei, Toshio, Shimizu, 424 (JP); Aoki, Terumi, Shimizu, 424 (JP)
(74) Representative: Schwabe - Sandmair - Marx

(56) References cited:
- EP-A- 0 051 861
- EP-A- 0 822 473
- EP-A- 0 845 724
- WO-A-96/40558
- FR-A- 2 688 643
- US-A- 3 882 305

## Description

### BACKGROUND OF THE INVENTION

### 1. Field of the Invention

The present invention relates to a remote maintenance and management control method for packing machines and the like in a packing plant, wherein such operations as maintenance or management can be carried out on packing machines and the like from a maintenance and management base which is located at a site remote from the packing plant.

### 2. Description of the Related Art

Conventionally, in the liquid filling and packing industry, when a liquid filling and packaging machine fails during operation, if a worker in the liquid filling and packing plant can not repair or restore the machine in short order, then the worker makes contact with a manufacturer related to the liquid filling and packing machine, informs the manufacturer of the failed state, receives therefrom the information on a corrective action based on the failure, and makes repairs or restoration by himself.

If the worker can not repair or restore the machine in spite of such effort, an engineer of the manufacturer is called out for on-site services.

Specifically, the former is the case that no professional engineer is present in the liquid filling and packing plant though individual liquid filling and packaging machines are increasing in complexity and accuracy and the expertise thereto is required, and an ordinary worker therein can not readily respond to the needs for repair or restoration.

Even if such worker can make some appropriate repairs or restorations, a great deal of time is spent on this repairing or restoring job, which causes to suspend the main liquid filling and packing process operations and thus the productivity is substantially reduced.

Meanwhile, in the latter case mentioned above, the main liquid filling and packing process operations are completely suspended until an engineer of the manufacturer reaches from a remote location to the liquid filling and packing plant, and further the resultant products can not be put on the market at low price because the repair or restoration cost thereof affects the production cost.

Especially, in the liquid filling and packing industry, it is not uncommon that the so-called process-type change to adapt a single liquid filling and packaging machine to carry out a plurality of types of processing operations is carried out. Generally, on the occasion of the process-type change, the engineer in the manufacturer and the worker (operator) in the liquid filling and packing plant make detailed prior discussions by telephone, or the worker carries out the process-type change in parallel with talking by telephone. Thus, in some cases, a communication gap therebetween may cause to consume longer time for the process-type change, and in the worst case, there is no other choice but the engineer of the manufacturer visits the liquid filling and packing plant. For that reason, the conventional liquid filling and packing machine presents serious problems as mentioned above.

WO96/40558 discloses a diagnostic system for a servomotor driven apparatus for the early detection of the need for service, thereby allowing for preventive maintenance to avert machine failure. A controller may operate to detect a service condition and then act in response to the sensed service condition.

EP 0 822 473 A2 discloses a remote maintenance system. Host computers in factories for monitoring industrial equipments are connected to a management host computer on a vendor side through the internet. The host computer on the factory side detects occurrence of a trouble of the industrial equipment and notifies the vendor site of status information representing a trouble state. In response to this, the host computer on the vendor side notifies the factory side of response information representing a counter measure against the trouble state.

### SUMMARY OF THE INVENTION

An object of the present invention, which was made to solve the aforementioned problems, is to provide a remote maintenance and management control method for packing machines and the like in a packing plant, wherein in a case where such operations as maintenance or management should be carried out on a packing machine or the like in the packing plant, the information regarding the generated situation is transmitted through communicating means to a maintenance and management base related to the packing machine or the like, the response information based on the transmitted generation information is prepared or selected by the maintenance and management base, the response information is supplied to the plant control means through the communicating means, and such operations as maintenance or management are carried out on the packing machine or the like based on the response information, thereby such operations as maintenance or management of the packing machine can be effected in a fast and reliable manner and the main liquid filling without delaying packing process.

The invention is defined in claim 1.

### BRIEF DESCRIPTION OF THE DRAWINGS

In the accompanying drawings,
FIG. 1 is a block diagram illustrating one embodiment of a remote maintenance and management control method for packing machines and the like in a packing plant of the present invention;
FIG. 2 is a block diagram illustrating another embodiment of the method shown in FIG. 1;
FIG. 3 is a flowchart of the method shown in FIG. 1 of solving a trouble by modifying a software program;
FIG. 4 is a flowchart of the method shown in FIG. 1 of solving a trouble by checking and inspecting with image pickup means; and
FIG. 5 is a flowchart of a remote maintenance according to the method shown in FIG. 1.

### DESCRIPTION OF THE PREFERRED EMBODIMENT

With reference to the figures, one embodiment of a remote maintenance and management control method for packing machines and the like in a packing plant of the present invention will be described below.

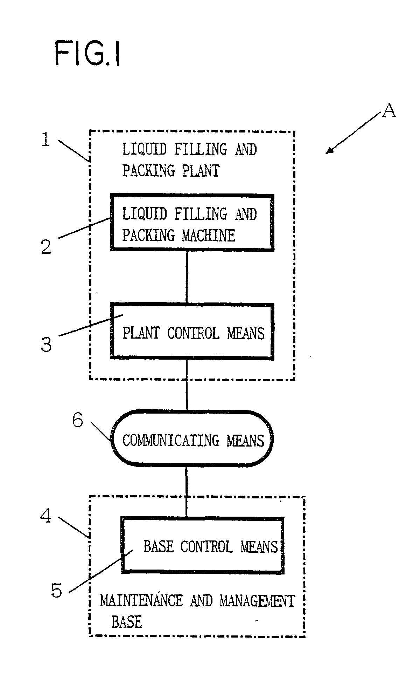

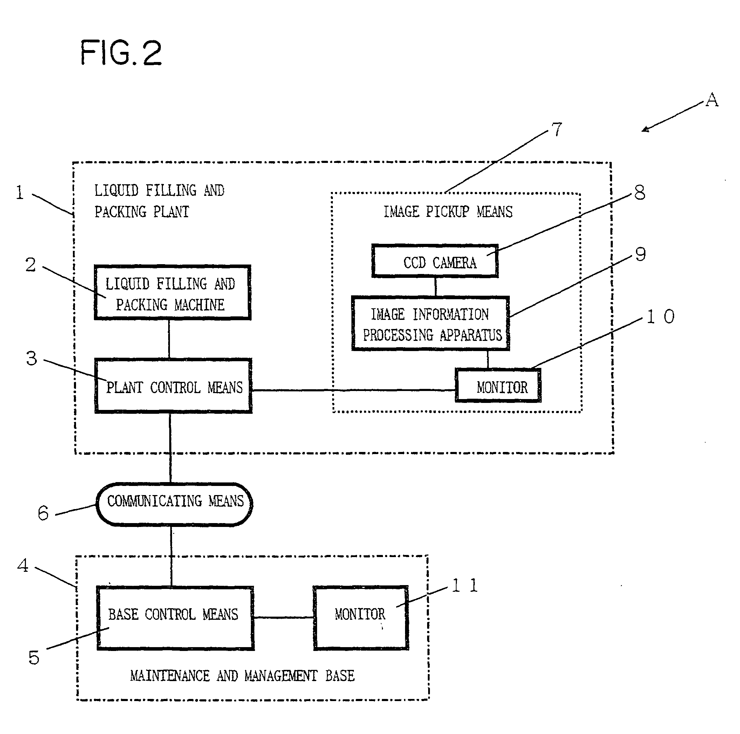

Referring to FIG. 1 and FIG. 2, "A" designates a general system in which one embodiment of a remote maintenance and management control method for packing machines and the like in a packing plant in accordance with the present invention is employed, wherein a plant control means 3 provided for each and the entirety of the individual packing machines 2 in a packing plant 1 is connected to a base control means 5 provided in a maintenance and management base 4 related to each individual packing machine 2 through communicating means 6.

Among others, the aforementioned packing plant 1 is, in the liquid filling and packing industry, the facility for carrying out a series of processing such operations as filling and packing liquid in a container and receiving the container. The packing plant 1 has individual packing machines 2, e.g., a re-palletizer or an arranging apparatus for containers and caps, a feeder for containers, caps, or fluids to be filled (including granules), a liquid filling machine, a capper, a label applier, a printer, an encasing machine, a palletizer, and the like (these machines are listed for illustrative purposes only).

Most of the individual packing machines 2 are programmed with a sequencer software stored in the plant control means 3 of the so-called computer which is almost totally automated by mechanical and electrical controls. An operator performs necessary operations under this program, thereby various automatic productions are conducted in sequence and the individual packing machines 2 are comprehensively controlled in their entirety.

Meanwhile, the maintenance and management base 4 mentioned above may be a manufacturer of each individual packing machine 2, a comprehensive control center which is capable of carrying out maintenance and management on the individual packing machines 2, or may be other facility having a base control means 5 consisting of a computer which stores therein operating information of the individual packing machines 2.

The plant control means 3 and the base control means 5 are connected to each other through the communicating means 6. The communicating means 6 may be arbitrary means which can provide wired or wireless intercommunications of required information by means of electric waves, light waves, and the like. A part or all of the program or the like is thereby allowed to be optionally downloaded from the plant control means 3 to the base control means 5 or uploaded from the base control means 5 to the plant control means 3.

Besides, the plant control means 3 and base control means 5 mentioned above are respectively provided with a transceiver which can transmit and receive the predetermined information.

The aforementioned remote maintenance and management control system "A", as shown in FIG. 2 can obtain image information by picking up an image through an image pickup means 7 and identify the information regarding the generated situation in a case where maintenance or management should be carried out.

In the packing plant 1 having therein the individual packing machines 2, this image pickup means 7 comprises a CCD camera 8 which is provided so as to be fixed to each individual packing machine 2 or to be freely rotatable, and an image information processing apparatus 9, which receives an image signal from this CCD camera 8 and performs predetermined processing. The signal processed by the image information processing apparatus 9 is supplied to the plant control means 3, and the image-from the CCD camera 8 can be checked through a monitor 10 such as a television set or the like.

In addition, the image information obtained through the CCD camera 8 of the image pickup means can also be checked through another monitor 11 such as a television set or the like in the base control means 5.

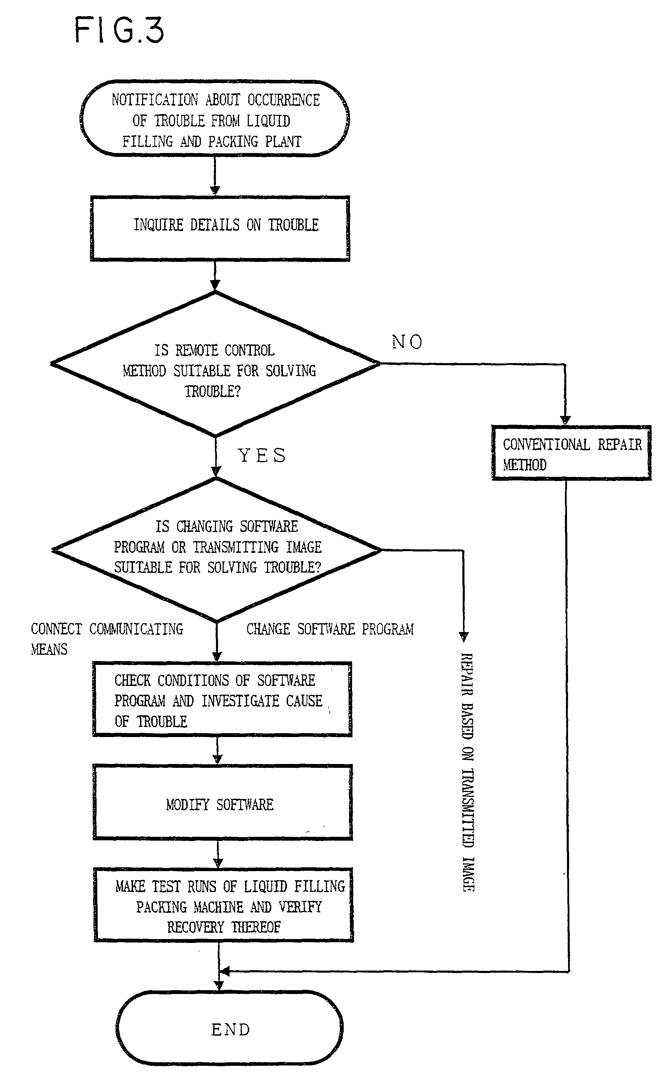

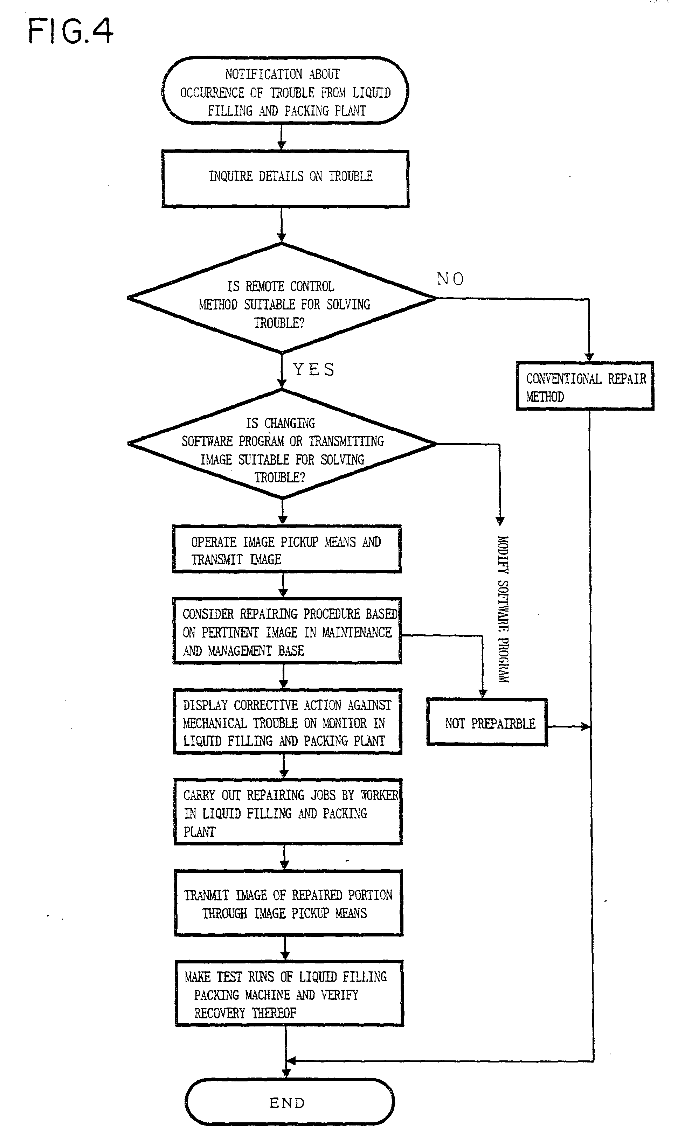

Thus the embodiment of the remote maintenance and management control method for packing machines and the like in a packing plant in accordance with the present invention which is adapted as mentioned above produces the effects as described later. A description thereof will be given below in connection with flowcharts illustrated in FIG. 3 and FIG. 4.

For example, if any trouble occurs in an individual packing machine 2 of the packing plant 1 located at a site remote from the maintenance and management base 4, the information on the trouble is transmitted, for example through telephone lines, to an engineer who is on call at the maintenance and management base 4.

Then the engineer at the maintenance and management base 4 grasps the content of the transmitted information on the trouble and determines whether the remote maintenance and management controlling method should be adopted or not.

At this time, if the remote maintenance and management controlling method can not deal with the trouble, then the engineer at the maintenance and management base 4 informs the operator for the individual packing machine 2 of a corrective action to be taken against the trouble, and the operator carries out repairing job.

Alternatively, the engineer at the maintenance and management base 4 visits the packing plant 1 for repairing the packing machine 2.

Meanwhile, if the remote maintenance and management controlling method can deal with the trouble, it is determined whether to modify a software program of the plant control means 3 or to take a counter action based on the image information of a failed portion identified by picking up an image through the image pickup means 7.

If the trouble is repairable by modifying the software program of the plant control means 3, the communicating means 6 coupled to the base control means 5 is connected to the plant control means 3, the state of the software program of the plant control means 3 is verified at the maintenance and management base 4 in order to track down the cause of the trouble.

As a result thereof, if any problem is found in the software program of the plant control means 3, the normal software program stored in the base control means 5 is transmitted to the plant control means 3 through the communicating means 6 in order to correct the software program in the plant control means 3.

In this case, the software program seemed to be wrong is once downloaded partially or entirely to the maintenance and management base 4, then the normal software program corresponding thereto is uploaded, or the normal software program is uploaded in a manner directly overwriting the wrong software program.

With this normal software program, the packing machine is subjected to a trial run in order to check the state of the software program of the plant control means 3 from the maintenance and management base 4, and the repairing job is completed after the recovery is verified.

On the other hand, when the engineer at the maintenance and management base 4 grasps the content of the transmitted information on the trouble, and tries to take a counter action based on the image information of a failed portion obtained by picking up the image thereof by the image pickup means 7, that is, when a mechanical trouble occurs, as shown in FIG. 2 and FIG. 4, the image pickup means 7 is allowed to be associated with the pertinent individual packing machine 2 in the packing plant 1, the image information is obtained by performing the predetermined image pickup operations using the CCD camera 8, and then a predetermined image processing is carried out by the image information processing apparatus 9.

This image information is captured into the maintenance and management base 4 through the communicating means 6, and the engineer inspects the failed state based on the image obtained from the monitor 11 which is connected to the base control means 5.

As a result of determining the cause of the troubles such as the improper mounting of a component and the breakage of a component, if the trouble comes from the breakage of a component, then the CCD camera 8 is operated to zoom in the image of the broken portion in order to identify the broken component through the image displayed on the monitor 11 in the maintenance and management base 4.

As a result, when the engineer at the maintenance and management base 4 verifies to assure that the component is broken, he reports so to the worker at the packing plant 1 and takes a predetermined action for recovery at the maintenance and management base 4.

On the other hand, if the trouble come from the improper mounting of a component, then the CCD camera 8 is operated to zoom in the image of the portion where the component is improperly mounted in order to identify the component through the image displayed in the monitor 11 of the maintenance and management base 4.

As a result, when the engineer at the maintenance and management base 4 verifies to assure that the component is mounted in an improper manner, then the monitor 10 in the packing plant 1 is allowed to display how to mount the component properly.

Based on the image displayed on the monitor 10, the worker at the packing plant 1 makes repairs on the improperly mounted portion of the pertinent individual packing machine 2.

After repairing, the engineer at the maintenance and management base 4 checks the repaired portion through the image transmitted to and displayed on the monitor 11 in the maintenance and management base 4, and subjects the pertinent individual packing machine to a trial run in order to verify the recovery thereof, and thus the repairing job is completed.

On top of that, in accordance with this embodiment, the CCD camera 8 of the image pickup means 7 may be provided in a manner to be fixed at an appropriate position in the packing plant and permitted free rotation within a range of arbitrary angles (in an arbitrary direction) by means of a servo motor or the like, or in a manner permitting free travelling along a path with respect to an individual packing machine 2 by means of a linear motor or the like. The free travelling control can provide more detail and efficient image of the failed position by making the CCD camera 8 to track the pertinent individual packing machine 2 in association with the operational movement thereof, and improve the accuracy on evaluations.

Further, the embodiment of the present invention provides the so-called remote maintenance for diagnosing the conditions of the liquid filling and packing operations of each individual packing machine 2 in the packing plant 1 by connecting through the communicating means 6 the plant control means 3 at the packing plant 1 and the base control means 5 at the maintenance and management base 5 for the pertinent individual packing machine 2 located at a site remote from the packing plant 1. Here, the term "remote" should be interpreted isolating from the distance conditions of the packing plant 1 and the maintenance and management base 4 such as inside or outside the national boundary.

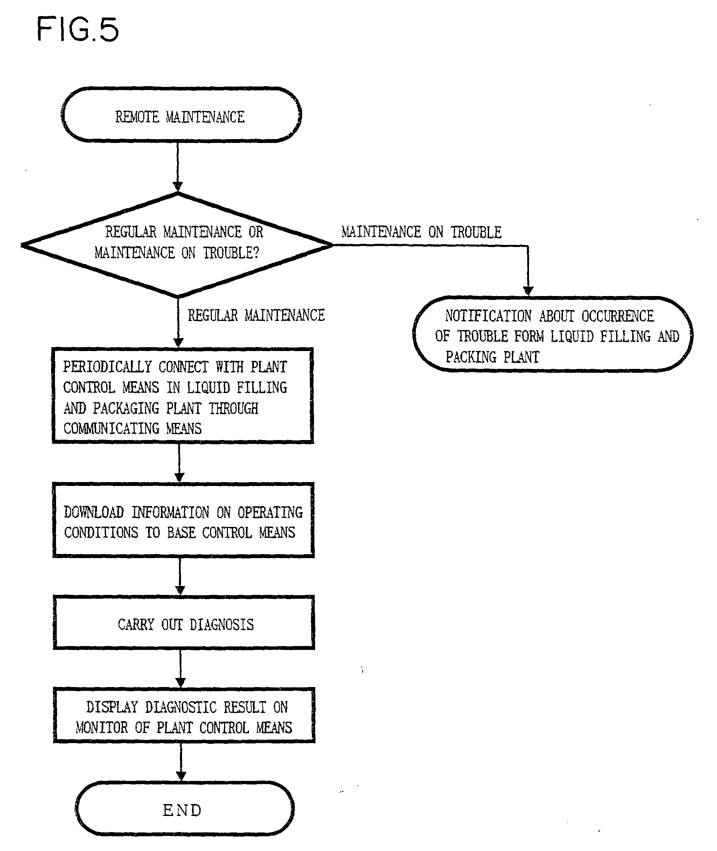

That is, as shown in FIG. 5, when maintenance is carried out periodically, the base control means 5 in the maintenance and management base 4 is connected to the plant control means 3 in the packing plant through the communicating means 6.

Then the operation information such as an operating time and a number of operations for each part of the individual packing machines 2 which are stored in the plant control means 3 are downloaded to the base control means 5 from the maintenance and management base 4.

Alternatively, regular maintenance diagnostics are carried out in real time by performing a logic operation on the information in the plant control means 3 from the base control means 5.

Then the results of the maintenance diagnostics are displayed on the monitor 10 of the plant control means 3, thereby the worker at the packing plant 1 can regularly check the current state of the individual packing machine in the packing plant 1.

Thus, various remote maintenance and management control can be carried out on each of the individual packing machines 2 in the packing plant 1. Further concrete examples will now be described below.

For example, for a container arranging apparatus in which the upper and lower limits for detecting the amount of the containers held therein are controlled by both optoelectronic upper and lower limit switches respectively, if the optoelectronic upper limit switch limit fails, then the software program in the plant control means 3 is modified so that the amount of the containers can be controlled only by the optoelectronic lower limit switch for detecting the lower limit, instead of the optoelectronic upper limit switch.

For a liquid filling machine, when an optoelectronic switch for detecting containers fails, the software program in the plant control means is modified so that any alternative optoelectronic switch on a conveyor can be substituted for the pertinent switch or the failed optoelectronic switch is forcefully turned off.

For weight base type filling controller, at the occasion when a parameter thereof is changed, for example, for filling another kind of liquid (on the process-type change), determination of the flowing times at the high flow rate and the low flow rate are determined or diagnosis on the filling state such as checking of the flow per unit of time are carried out, and based on the results thereof, the software program for changing the rate of high or low flow from the maintenance and management base 1 or the software program for switching the filling mode to either high flow or low flow is modified from the maintenance and management base 4.

For a capper, when a cap feeding wheel overload protection proximity switch for a safety system fails, the software program is modified to turn forcefully the capper to the OFF state, and when other switches fail, the software program is modified so that an alternative switch can be used or so that a container is not fed into a capping area.

In addition, when a parameter of the capper is changed, for example, for using another type of a container or cap (on the process-type change), the software program is modified so as to adapt to changing a cap screwing rate by a motor, changing the operating time for temporal tightening or full-tightening, or the like.

For a caser, in the case such as when a device like a switch for detecting respective materials, a glue level meter or a cylinder switch fails, when a parameter of respective members is changed, or when a current robot control program is changed, the software program in the plant control means 3 is modified.

For a production line in the packing plant 1 in the case such as when a parameter of a inverter or servomotor is changed or when functions of respective switches are changed, the software program in the plant control means 3 is modified.

The aforementioned examples are listed for illustrative purposes only, and in accordance with the present invention, an electric control system trouble or a mechanical trouble in the packing plant 1 can be addressed from the maintenance and management base 4 as appropriately.

In accordance with the present invention as mentioned above, packing machines and the like can be remote controlled optionally by connecting through communicating means between a plant control means in a packing plant and a base control means in the maintenance and management base corresponding to each individual packing machine, and therefore it is possible to adapt in real time to the needs of maintenance or management, and further when any problem occurs on each individual packing machine, emergency correction can be provided from the maintenance and management base which is located distant from the packing plant irrespective of inside or outside the national boundary, and the pertinent packing machine can be re-run without delaying the main process.

Particularly, if any full-time professional engineer is not stationed on site, complicated and intricate operations to address a trouble or to change the process-type can be accomplished from a remote maintenance and management base.

If the packing plant and the maintenance and management base are located at a considerable distance from each other, the number of travels of the engineer at the maintenance and management base for maintenance management on the individual packing machines decreases to a minimum, and therefore the production cost in the liquid filling and packing industry can be reduced. Thus, the present invention brings about excellent effects as mentioned above.

## Claims

1. A remote maintenance and management control method for packing machines (2) and the like in a packing plant (1), **characterized by** the steps of:
connecting a computerized plant control means (3) for each and the entirety of the packing machines (2) or the like in the packing plant (1) to a computerized base control means (5) in a maintenance and management base (4) related to packing machines (2) and located at a site remote from the packing plant (1) through communicating means (6);
in a case where a trouble for which remote maintenance or management should be carried out occurs either with the individual packing machine (2) or with the plant control means (3) in the packing plant (1), transmitting the information regarding the generated situation to the base control means (5) in the maintenance and management base (4) related to the individual packing machine (2) or the like through the communicating means (6);
based on the information regarding the generated situation that has been transmitted, determining whether the cause of the trouble is attributed to a packing machine (2) or the plant control means (3) in the packing plant (1); and
a) as a result of the determination regarding the trouble, when the trouble is determined to be caused with the individual packing machine (2) in the packing plant (1), picking up images of portions of the individual packing machine (2) in the packing plant (1) by using image pickup means (7) in the packing plant (1) to thereby obtain pieces of image information thereon;
transmitting the image information to the base control means (5) in the maintenance and management base (4) related to the individual packing machine (2) or the like by using the communicating means (6);
selecting portions where the trouble is caused from the image information that has been transmitted to determine the cause of the trouble based on the image information;
preparing or selecting the response information needed for performing repair for the trouble caused with the individual packing machine (2) or the like in the maintenance and management base (4);
supplying the response information to the plant control means (3) in the packing plant (1) through the communicating means (6); and
carrying out the operations such as maintenance or management on the individual packing machine (2) or the like in the packing plant (1) based on the response information; or
b) as a result of the determination regarding the trouble, when the trouble is determined to be caused with a software program of the plant control means (3), transmitting a correcting software program to repair the plant control means (3) from the base control means (5) to the plant control means (3) in the packing plant (1) through the communicating means (6);
modifying the software program of the plant control means (3) based on the correcting software program;
carrying out the operations such as maintenance or management on the individual packing machine (2) or the like in the packing plant (1).

## Patentansprüche

1. Steuerverfahren für die Fernwartung und Leitung für Verpackungsmaschinen (2) und dergleichen in einer Verpackungsanlage (1) **gekennzeichnet durch** die Schritte:
Verbinden einer computerisierten Anlagensteuervorrichtung (3) für jede und die Gesamtheit der Verpackungsmaschinen (3) oder dergleichen in der Verpackungsanlage (1) mit einer computerisierten Basissteuervorrichtung (5) in einer Wartungs- und Leitungsbasis (4), welche den Verpackungsmaschinen (2) zugeordnet ist und an einer Stelle entfernt von der Verpackungsanlage (1) angeordnet ist, **durch** eine Kommunikationsvorrichtung (6);
in einem Fall wenn ein Problem, für welches eine Fernwartung oder Leitung ausgeführt werden soll, auftritt entweder bei der einzelnen Verpackungsmaschine (2) oder bei der Anlagensteuervorrichtung (3) in der Verpackungsanlage (1), übertragen der Information bezüglich der erzeugten Situation an die Basissteuervorrichtung (5) in der Wartungs- und Leitungsbasis (4), welche der einzelnen Verpackungsmaschine (2) oder dergleichen zugeordnet ist, **durch** die Kommunikationsvorrichtung (6);
basierend auf der Information bezüglich der erzeugten Situation, welche übertragen wurde, bestimmen ob der Grund des Problems einer Verpackungsmaschine (2) oder der Anlagensteuervorrichtung (3) in der Verpackungsanlage (1) zugeordnet ist; und
a) als Ergebnis der Bestimmung bezüglich des Problems, wenn das Problem so bestimmt wird, dass es verursacht wird bei der einzelnen Verpackungsmaschine (2) in der Verpackungsanlage (1), aufnehmen von Bildern von Teilen der einzelnen Verpackungsmaschine (2) in der Verpackungsanlage (1) unter Verwendung einer Bildaufnahmevorrichtung (7) in der Verpackungsanlage (1), um **dadurch** Stücke einer Bildinformation dazu zu erhalten;
Übertragen der Bildinformation zu der Basissteuervorrichtung (5) in der Wartungs- und Leitungsbasis (4), welche der einzelnen Verpackungsmaschine (2) oder dergleichen zugeordnet ist, unter Verwendung der Kommunikationsvorrichtung (6);
Auswählen von Teilen wo das Problem verursacht wird aus der Bildinformation, welche übertragen wurde, um den Grund des Problems zu bestimmen, basierend auf der Bildinformation;
Vorbereiten oder Auswählen der Antwortinformation, welche benötigt wird zum Durchführen einer Reparatur für das Problem, verursacht bei der einzelnen Verpackungsmaschine (2) oder dergleichen, in der Wartungsund Leitungsbasis (4);
Zuführen der Antwortinformation zu der Anlagensteuervorrichtung (3) in der Verpackungsanlage (1) **durch** die Kommunikationsvorrichtung (6); und
Ausführen der Arbeitsgänge wie z.B. Wartung oder Leitung bei der einzelnen Verpackungsmaschine (2) oder dergleichen in der Verpackungsanlage (1) basierend auf der Antwortinformation; oder
b) als Ergebnis der Bestimmung bezüglich des Problems, wenn das Problem so bestimmt wird, dass es verursacht wurde bei einem Softwareprogramm der Anlagensteuervorrichtung (3), Übertragen eines Korrektur-Software-Programms, um die Anlagensteuervorrichtung (3) zu reparieren, von der Basissteuervorrichtung (5) zu der Anlagensteuervorrichtung (3) in der Verpackungsanlage (1) **durch** die Kommunikationsvorrichtung (6);
Modifizieren des Softwareprogramms der Anlagensteuervorrichtung (3) basierend auf dem Korrektur-Software-Programm;
Ausführen der Arbeitsgänge wie z.B. Wartung oder Leitung der einzelnen Verpackungsmaschine (2) oder dergleichen in der Verpackungsanlage (1).

## Revendications

1. Un procédé d'entretien et de commande de gestion à distance pour machines d'emballage (2) ou similaire dans une usine d'emballage (1), **caractérisé par** les étapes suivantes :
connecter des moyens de commande informatisés de l'usine (3) pour chacune et pour la totalité des machines d'emballage (2) ou similaire de l'usine d'emballage (1) à des moyens de commande informatisés d'une base (5) d'entretien et de gestion (4) reliée aux machines d'emballage (2) et installée sur un site distant de l'usine d'emballage (1) par l'intermédiaire de moyens de communication (6) ;
dans le cas où une anomalie pour laquelle un entretien ou une gestion à distance serait à effectuer interviendrait soit dans la machine d'emballage individuelle (2), soit dans les moyens de commande de l'usine (3) dans l'usine d'emballage (1), transmettre les informations concernant la situation créée aux moyens de commande de la base (5) dans la base d'entretien et de gestion (4) associée à la machine d'emballage individuelle (2) ou similaire par l'intermédiaire des moyens de communication (6) ;
en se basant sur des informations concernant la situation créée qui ont été transmises, déterminer si la cause de l'anomalie est attribuée à une machine d'emballage (2) ou aux moyens de commande de l'usine (3) dans l'usine d'emballage (1) ; et
a) à la suite de la détermination concernant l'anomalie, lorsqu'il a été déterminé que l'anomalie est causée par la machine d'emballage individuelle (2) de l'usine d'emballage (1), prendre des images de parties de la machine d'emballage individuelle (2) dans l'usine d'emballage (1) en utilisant un moyen de prise d'images (7) dans l'usine d'emballage (1) afin d'obtenir ainsi des éléments d'information en images sur la machine en question ;
transmettre les informations en images aux moyens de commande de la base (5) dans la base d'entretien et de gestion (4) associée à la machine d'emballage individuelle (2) ou similaire en utilisant les moyens de communication (6) ;
sélectionner les parties où l'anomalie est causée parmi les informations en images qui ont été transmises pour déterminer la cause de l'anomalie sur la base des informations en images ;
préparer ou sélectionner les informations de réponse nécessaires pour effectuer la réparation correspondant à l'anomalie causée sur la machine d'emballage individuelle (2) ou similaire dans la base d'entretien et de gestion (4) ;
fournir les informations de réponse aux moyens de commande de l'usine (3) dans l'usine d'emballage (1) par l'intermédiaire des moyens de communication (6) ; et
effectuer les opérations telles que l'entretien ou la gestion sur la machine d'emballage individuelle (2) ou similaire dans l'usine d'emballage (1) en se basant sur les informations de réponse ; ou
b) à la suite de la détermination concernant l'anomalie, lorsqu'il a été déterminé que l'anomalie est causée par un logiciel des moyens de commande de l'usine (3), transmettre un logiciel de correction pour réparer les moyens de commande de l'usine (3) depuis les moyens de commande de la base (5) vers les moyens de commande de l'usine (3) dans l'usine d'emballage (1) par l'intermédiaire des moyens de communication (6) ;
modifier le logiciel des moyens de commande de l'usine (3) à partir du logiciel de correction ;
effectuer les opérations telles que l'entretien ou la gestion sur la machine d'emballage individuelle (2) ou similaire dans l'usine d'emballage (1).
